# EUROPÄISCHE PATENTSCHRIFT

(11) **EP 1 444 809 B1**
(45) Veröffentlichungstag und Bekanntmachung des Hinweises auf die Patenterteilung: **07.09.2005**
(21) Anmeldenummer: 02785053.6
(22) Anmeldetag: 13.11.2002
(51) Int. Cl.: H04L 12/26, H04L 12/403, B60R 16/02, H04L 29/14, G06F 13/38

(54) **Verfahren und Vorrichtung zur Überprüfung der fehlerfreien Funktion von Modulen in einem Bussystem mit einer Zentraleinheit**
Method and device for checking the error-free function of modules in a bus system comprising a central unit
Procédé et dispositif de surveillance de la fonction exempte d'erreurs de modules dans un système de bus comprenant une unité centrale

(30) Priorität: 14.11.2001 DE 10155975
(43) Veröffentlichungstag der Anmeldung: 11.08.2004
(73) Patentinhaber: Conti Temic microelectronic GmbH, 90411 Nürnberg (DE); ROBERT BOSCH GMBH, 70442 Stuttgart (DE); SIEMENS AKTIENGESELLSCHAFT, 80333 München (DE)
(72) Erfinder: BOGENRIEDER, Hans-Georg, 85077 Manching (DE); WULFF, Holger, 85051 Ingolstadt (DE); BÜHRING, Heiko, 26125 Oldenburg (DE); MAURITZ, Ewald, 71287 Weissach (DE); MEIER, Klaus-Dieter, 71229 Leonberg (DE); PFAFFENEDER, Bernd, 93138 Lappersdorf (DE)
(86) Internationale Anmeldenummer: PCT/DE2002/004189
(87) Internationale Veröffentlichungsnummer: WO 2003/047171

(56) Entgegenhaltungen:
- US-A- 5 721 737
- STEININGER A ET AL: "ECONOMIC ONLINE SELF-TEST IN THE TIME-TRIGGERED ARCHITECTURE" IEEE DESIGN & TEST OF COMPUTERS, IEEE COMPUTERS SOCIETY. LOS ALAMITOS, US, Bd. 16, Nr. 3, Juli 1999 (1999-07), Seiten 81-89, XP000849067 ISSN: 0740-7475
- GUNZERT M ET AL: "Component-based development and verification of safety critical software for a brake-by-wire system with synchronous software components" SOFTWARE ENGINEERING FOR PARALLEL AND DISTRIBUTED SYSTEMS, 1999. PROCEEDINGS. INTERNATIONAL SYMPOSIUM ON LOS ANGELES, CA, USA 17-18 MAY 1999, LOS ALAMITOS, CA, USA,IEEE COMPUT. SOC, US, 17. Mai 1999 (1999-05-17), Seiten 134-145, XP010343696 ISBN: 0-7695-0191-5

## Beschreibung

Die Erfindung betrifft ein Verfahren zur Überprüfung der fehlerfreien Funktion von Modulen in einem Bussystem mit einer Zentraleinheit.

Bussysteme zum Datenaustausch zwischen einer Zentraleinheit und einer Mehrzahl von Modulen mittels eines Datenprotokollrahmens, auch für Insassenschutzsystems sind beispielweise aus der DE 196 09 076, DE 196 16 293, EP 0 849 122 oder DE 198 13 954 oder US-A-5 721 737 bekannt. Jedem Modul ist dabei eine Position innerhalb des Datenprotokollrahmens zugewiesen, an der das Modul im fehlerfreien Zustand auf ein Befehl für eine Datenanfrage im Normalbetrieb Daten an die Zentraleinheit und/oder die anderen Module sendet. Die US-A-5 721 737 offenbart zudem bereits einen sogenannten Broadcast-Mode, bei dessen Empfang keine Antwort der Module an die Zentraleinheit erforderlich ist.

Neben dem Ausfall von Modulen, welcher aus dem Fehlen der Daten auf die Datenanfrage hin erkannt werden kann, können jedoch weitere Fehler im Bussystem bzw, den Modulen auftreten, welche den Datenaustausch stören würden. So wurde erkannt, dass Module aufgrund von Störungen in ihrem Speicher auf andere als die ihnen zugewiesenen Datenanfragebefehle hin ihre Daten versendeten, zum Teil auch durch Störungen in der Sendeschaltung nicht mehr an der ihnen zugewiesenen Position senden und es so zur Störung des gesamten Datenaustauschs kommt.

Aufgabe der Erfindung ist ein geeignetes Verfahren zur Überprüfung der fehlerfreien Funktion von Modulen in einem Bussystem sowie entsprechende Vorrichtungen vorzustellen. Zudem werden geeignete Module sowie eine entsprechende Zentraleinheit und ein entsprechendes Bussystem vorgestellt.

Grundgedanke ist dabei ein besonders vereinbarter Befehl, nachfolgend kurz Schweige-Befehl genannt, auf den hin die Module im fehlerfreien Zustand in einen Schweige-Betriebsmodus wechseln und auch auf die vereinbarte Datenanfrage hin gerade keine Daten senden. Dieser Schweige-Befehl eröffnet eine Reihe von Überprüfungsmöglichkeiten.

So werden jeweils alle Module bis auf ein zu testendes Modul in den Schweige-Betriebsmodus gesetzt und nachfolgend zumindest eine, vorzugsweise alle für dieses zu testende Modul vereinbarten und/oder zumindest eine, vorzugsweise alle für dieses Modul nicht vereinbarten Datenabfragen gesendet.

Dabei geprüft wird, ob das Modul auf die vereinbarte(n) Datenabfrage(n) seine Daten sendet und auf die nicht vereinbarten Datenabfragen schweigt. Bei einem Fehler wird eine Fehlerroutine durchgeführt, das entsprechende Modul beispielsweise deaktiviert oder ein Reset durchgeführt.

Da die anderen Module schweigen kann zusätzlich die Position der rückgesendeten Daten erfasst und mit einer SollPosition verglichen werden. Dies ist in der Regel im Normalbetrieb nicht möglich, weil sich dort die den Modulen zugewiesenen Abschnitte im Datenprotokollrahmen unmittelbar anschließen und bei Verschiebungen es zu einer Überlagerung kommt, aus der heraus nicht mehr unterschieden werden kann, wer wann wo sendet.

Da jedoch eventuell ein Modul derart gestört ist, dass es den Schweige-Befehl nicht erkennt, werden vorzugsweise zusätzlich vorab zunächst alle Module in den Schweige-Betriebsmodus gesetzt, nachfolgend zumindest eine, vorzugsweise alle zumindest für eines der Module vereinbarten Datenabfragen gesendet und dabei geprüft, ob eines der Module trotz des Schweige-Betriebsmodus auf die vereinbarte(n) Datenabfrage(n) Daten sendet.

Die Erfindung soll nachfolgend anhand von Ausführungsbeispielen und Figuren näher erläutert werden. Kurze Beschreibung der Figuren:
- Fig. 1: Bussystem
- Fig. 2: Ablaufschema des bevorzugt weitergebildeten Verfahrens
- Fig. 3: Skizzierung der Überprüfung der Position der gesendeten Daten im Protokollrahmen

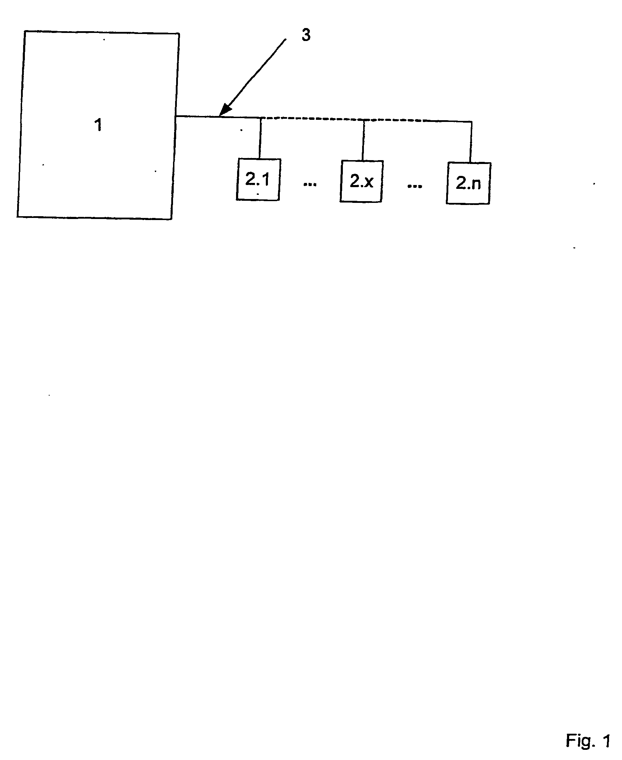

Fig. 1 skizziert ein Bussystem bestehend aus einer Zentraleinheit 1 sowie einer Mehrzahl von Modulen 2.1...2.n, die mit der Zentraleinheit 1 über eine (oder mehrere) Busleitung(en) 3 zum Datenaustausch verbunden sind. Die Struktur des Bussystems, hier in Fig. 1 als Strang skizziert, ist dabei frei wählbar und die Erfindung für alle Busarchitekturen einsetzbar, insbesondere auch für Ring-, Daisy-Chain- oder Parallelbussysteme. Verwendung findet dieses Bussystem zum Datenaustausch zwischen einer Zentraleinheit eines Insassenschutzsystems in einem Fahrzeug sowie den zum Datenaustausch vorgeschalteten Modulen von Sensoren und/oder Insassenschutzeinrichtungen.

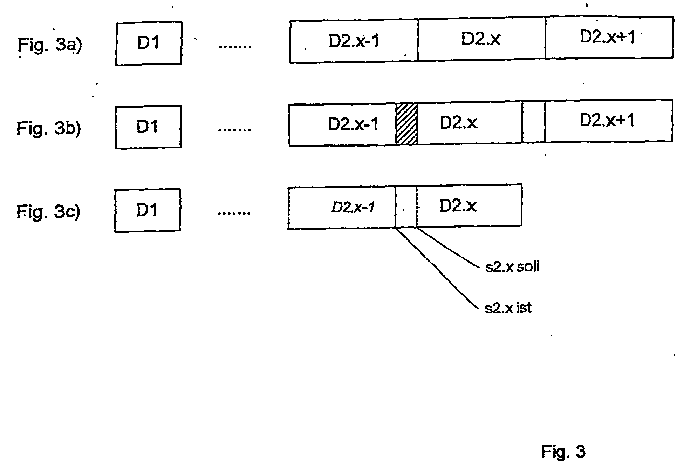

Für jedes Modul, in Fg. 1 beispielsweise das Modul 2.x ist eine zugewiesene Position D2.x (vgl. Fig. 3) innerhalb des Datenprotokollrahmens abgespeichert und zumindest ein Befehl für eine Datenanfrage (D1 in Fig. 3) vorgesehen, auf den hin die Module im fehlerfreien Zustand im Normalbetrieb Daten an die Zentraleinheit 1 und/oder die anderen Module 2.1...2.n senden.

Vorzugsweise kann zumindest für eine Gruppe von Modulen 2.1...2.n eine gemeinsam an diese Gruppe gerichtete Datenanfrage D1, also eine sogenannte Polling-Anfrage verwendet werden, auf die hin die Module 2.1...2.n der Gruppe ihre Daten nacheinander jeweils an ihrer Position D2.1...D2.n senden. Ohne weiteres können auch alle Module 2.1...2.n über eine einzige gemeinsame Polling-Anfrage ausgelesen werden.

Das besondere an der Zentraleinheit 1 wie auch den Modulen 2.1...2.n ist, daß ein Befehl zum Schweigen, nachfolgend kurz Schweige-Befehl vorgesehen ist, auf den hin die Module 2.1...2.n im fehlerfreien Zustand in einen Schweige-Betriebsmodus wechseln und die auf die vereinbarte Datenanfrage D1 hin gerade keine Daten mehr senden.

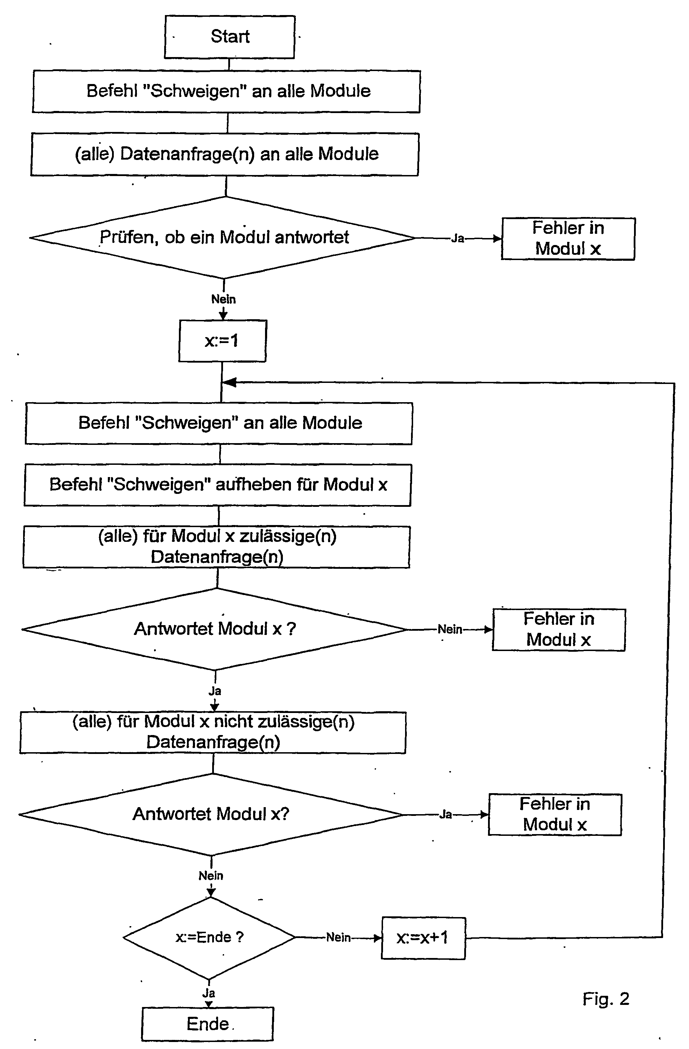

Mittels dieses Schweige-Befehls können in einer bevorzugten Weiterbildung des Verfahrens gemäß des Anspruchs 2 in Verbindung mit Anspruch 1 zunächst alle Module in den Schweige-Betriebsmodus gesetzt und dann mittels der vereinbarten Datenanfragen geprüft werden, ob noch alle Module in den Schweige-Betriebsmodus wechseln. In Fig. 2 ist der Ablauf dabei bis zum ersten Prüfschritt: "Prüfen, ob ein Modul antwortet" skizziert. Diese vorgeschaltete Überprüfung ermöglicht, sogenannte bubbling idiots, also dauerhaft sendende Module zu erkennen. Über die Header-Information der von dem Modul rückgesandten Daten kann dieses gestörte Modul identifiziert und eine Fehlerroutine gestartet werden. Derzeit ist eine Deaktivierung des jeweiligen Moduls vorgesehen.

Nachfolgend werden, wie in Fig. 2 als Schleifenprozeß mit einer Laufvariablen x von 1 bis n (n= Anzahl der Module) jeweils alle Module bis auf ein zu testendes Modul (2.x) in den Schweige-Betriebsmodus gesetzt und anhand der für dieses zu testende Modul vereinbarten und/oder der für dieses Modul nicht vereinbarten Datenanfragen geprüft, ob das Modul auf die vereinbarte(n) Datenabfrage(n) seine Daten sendet und auf die nicht vereinbarten Datenanfragen schweigt. Ist allen Modulen die gleiche Datenanfrage zugewiesen, so kann durch eine Pausenzeit oder eine fingierte abweichende Datenanfrage getestet werden, ob die Module darauf entsprechend reagieren, also nicht weiter senden. Die Umschaltung in den Schweige-Betriebsmodus kann beispielsweise wie in Fig. 2 skizziert derart erfolgen, dass zunächst alle Module 2.1 .... 2.n den Schweige-Befehl erhalten, dieser nachfolgend jeweils für das zu testende Modul 2.x wieder aufgehoben wird. Zudem wird ein Befehl zur Aufhebung des Schweige-Betriebszustands an alle Module 2.1 bis 2.n gemeinsam noch vorgesehen.

Zusätzlich kann während der Überprüfung die Position s2.xᵢₛₜ der rückgesendeten Daten D2.x für das zu testende Modul (2.x) erfasst und mit einer Soll-Positions2.xₛₒₗₗ verglichen werden, was in der Regel im Normalbetrieb nicht möglich ist. Ein solcher Schritt wäre in Fig. 2 bspw. in die Überprüfung "Antwortet Modul x ?" auf "(alle) für das Modul x zulässige(n) Datenanfrage(n)" integrierbar. Die Positionsüberprüfung wird anhand von Fig. 3 jedoch besonders anschaulich. So ist in Fig. 3a zunächst eine fehlerfreie Datenübertragung des Moduls 2.x auf die Datenanfrage D1 hin an Position D2.x skizziert, wobei die Datenübertragung der anderen Module, hier für 2.x-1 und 2.x+1 skizziert, vorausgeht bzw. anschließt.

Kommt es im Normalbetrieb zu einer falschen Positionszuordnung oder, wie in Fig. 3b skizziert, zu einer Verschiebung des Sendeanfangs von s2.xₛₒₗₗ auf s2.xᵢₛₜ, so tritt in jedem Fall eine Überlagerung (straffiert dargestellt) der Daten zweier Module (hier D2.x-1 & D2.x). Dadurch werden die Daten nicht nur unbrauchbar - es ist auch nicht zweifelsfrei erkennbar, ob nun das Modul 2.x-1 oder das Modul 2.x fehlerhaft ist. Genau an dieser Stelle ist der Schweige-Befehl von besonderem Nutzen, denn es wird möglich, dass alleine das Modul 2.x sendet und man so die Verschiebung des Sendeanfangs von s2.xₛₒₗₗ auf s2.xᵢₛₜ in den Positionsbereich D2.x-1 für das Modul 2.x-1 erkennen kann, wie in Fig. 3c dargestellt. Der Positionsbereich D2.x-1 für das Modul 2.x-1 ist in Fig. 3c gestrichelt dargestellt, da Modul 2.x-1 aufgrund des Schweige-Befehls ja gerade nicht sendet.

## Patentansprüche

1. Verfahren zur Überprüfung der fehlerfreien Funktion von Modulen (2.1...2.n) in einem Bussystem mit einer Zentraleinheit (1) zum Datenaustausch mittels eines Datenprotokollrahmens,
a) wobei für jedes Modul (2.x) eine zugewiesene Position (D2.x) innerhalb des Datenprotokollrahmens vorgegeben ist,
b) zumindest eine Datenanfrage (D1) vereinbart ist, auf den hin zumindest eines der Module (2.x) im fehlerfreien Zustand im Normalbetrieb Daten an die Zentraleinheit (1) und/oder die anderen Module (2.1...2.n) sendet,
c) **dadurch gekennzeichnet, daß** ein Befehl zum Schweigen vorgesehen ist, auf den hin die Module (2.1...2.n) im fehlerfreien Zustand in einen Schweige-Betriebsmodus wechseln und auf die vereinbarte Datenanfrage (D1) hin keine Daten senden, wobei
d) zunächst alle Module (2.1...2.n) in den Schweige-Betriebsmodus gesetzt werden,
e) nachfolgend die vereinbarte Datenanfrage (D1) gesendet wird und
f) dabei geprüft wird, ob eines der Module (2.1...2.n) trotz des Schweige-Betriebsmodus auf die vereinbarte Datenanfrage (D1) Daten sendet,
g) dann jeweils alle Module (2.1..., 2.x,...2.n) bis auf ein zu testendes Modul (2.x) in den Schweige-Betriebsmodus gesetzt werden,
h) nachfolgend zumindest eine für dieses zu testende Modul (2.x) vereinbarte Datenanfrage (D1) gesendet wird und
i) dabei geprüft wird, ob das Modul (2.x) auf die vereinbarte Datenanfrage seine Daten sendet.

2. Verfahren nach Anspruch 1, **dadurch gekennzeichnet, dass**
b1) für ein Modul (2.x) zumindest eine erste Datenanfrage (D1) vereinbart ist, auf den hin das Modul (2.x) im fehlerfreien Zustand im Normalbetrieb Daten an die Zentraleinheit (1) und/oder die anderen Module (2.1...2.n) sendet,
b2) eine zweite Datenanfrage vorgesehen, aber für dieses Modul (2.x) nicht vereinbart ist,
d) und jeweils alle Module (2.1..., ...2.n) bis auf dieses Modul (2.x) in den Schweige-Betriebsmodus gesetzt werden,
e2) nachfolgend die für dieses Modul nicht vereinbarte zweite Datenanfrage gesendet wird und
f2) dabei geprüft wird, ob das Modul (2.x) auf die nicht vereinbarte, zweite Datenanfrage schweigt.

3. Verfahren nach einem der vorangehenden Ansprüche, wobei jeweils auch die Position (s2.x ist) der gesendeten Daten erfasst und mit der vorgegebenen Position (s2.x soll) verglichen wird.

4. Zentraleinheit (1) für ein Bussystem zum Datenaustausch mit einer Mehrzahl von Modulen (2.1...2.n) mittels eines Datenprotokollrahmens, wobei in der Zentraleinheit (1)
a) für jedes Modul (2.x) eine zugewiesene Position (D2.x) innerhalb des Datenprotokollrahmens abgespeichert ist,
b) zumindest ein Befehl für eine Datenanfrage (D1) vorgesehen ist, auf den hin die Module im fehlerfreien Zustand im Normalbetrieb Daten an die Zentraleinheit (1) und/oder die anderen Module (2.1...2.n) senden,
**dadurch gekennzeichnet, dass**
c) die Zentraleinheit zum Senden eines Befehls zum Schweigen konfiguriert ist, auf den hin die Module (2.1...2.n) im fehlerfreien Zustand in einen Schweige-Betriebsmodus wechseln und auf die vereinbarte Datenanfrage (D1) hin keine Daten senden.

5. Modul (2.1...2.n) für ein Bussystem zum Datenaustausch zwischen einer Zentraleinheit (1) und einer Mehrzahl von diesen Modulen (2.1...2.n) mittels eines Datenprotokollrahmens, wobei
a) in jedem Modul (2.x) eine zugewiesene Position (D2.x) innerhalb des Datenprotokollrahmens abgespeichert ist,
b) zumindest ein Befehl für eine Datenanfrage (D1) vorgesehen ist, auf den hin das Modul (2.x) im fehlerfreien Zustand im Normalbetrieb Daten an die Zentraleinheit (1) und/oder die anderen Module (2.1...2.n) sendet,
**dadurch gekennzeichnet, dass**
c) das Modul (2.x) derart konfiguriert ist, dass es auf einen Befehl zum Schweigen hin im fehlerfreien Zustand in einen Schweige-Betriebsmodus wechselt und auf die vereinbarte Datenanfrage (D1) hin keine Daten sendet.

6. Bussystem bestehend aus einer Zentraleinheit (1) gemäß Anspruch 4 sowie einer Mehrzahl von Modulen (2.1...2.n) gemäß Anspruch 5, die mit der Zentraleinheit (1) über eine Busteitung (3) zum Datenaustausch verbunden sind.

7. Bussystem nach Anspruch 6, **dadurch gekennzeichnet, dass** zumindest für eine Gruppe von Modulen (2.1...2.n) eine gemeinsam an diese Gruppe gerichtete Datenanfrage (D1) vorgesehen ist, wobei die Module derart ausgestaltet sind, daß auf die an diese Gruppe gemeinsam gerichtete Datenanfrage hin die Module (2.1...2.n) ihre Daten nacheinander jeweils an ihrer Position (D2.1...D2.n) senden.

8. Insassenschutzsystem für den Einsatz in einem Fahrzeug mit einer Zentraleinheit (1) sowie Modulen (2.1...2.n) von Sensoren und/oder Insassenschutzeinrichtungen, **dadurch gekennzeichnet, dass** es ein Bussystem nach einem der vorangehenden Ansprüche 6 oder 7 beinhaltet welches derart unsgestaltet ist, daß der Datenaustausch zwischen der Zentraleinheit (1) und den Modulen (2.1...2.n) mittels dieses Bussystems erfolgt.

## Claims

1. Method for checking the error-free function of modules (2.1...2.n) in a bus system comprising a central unit (1) for data exchange by means of a data protocol frame,
a) wherein an assigned position (D2.x) within the data protocol frame is predetermined for each module (2.x);
b) there is at least one declared data inquiry (D1) in reply to which at least one of the modules (2.x), in error-free condition in normal operation, transmits data to the central unit (1) and/or the other modules (2.1...2.n);
c) **characterized in that** there is provided an instruction to be silent in reply to which the modules (2.1...2.n), in error-free condition, switch to a silence mode and do not transmit any data in reply to the declared data inquiry (D1), wherein
d) all modules (2.1...2.n) are first placed in silence mode;
e) the declared data inquiry (D1) is transmitted after that; and
f) the modules (2.1...2.n) are checked in this connection to see whether one of them transmits data in reply to the declared data inquiry (D1) in spite of the silence mode;
g) then all modules (2.1...,2.n), with the exception of one module (2.x) to be tested, are placed in silence mode a time;
h) at least one data inquiry (D1) that is declared for said module (2.x) to be tested is transmitted after that; and
i) the module (2.x) is checked in this connection to see whether it transmits its data in reply to the declared data inquiry.

2. Method according to claim 1, **characterized in that**
b1) at least a first data inquiry (D1) is declared for a module (2.x) in reply to which data inquiry the module (2.x), in error-free condition in normal operation, transmits data to the central unit (1) and/or the other modules (2.1...2.n);
b2) there is provided a second data inquiry that is not declared for said module (2.x), though;
d) and all modules (2.1...,2.n), with the exception of said module (2.x), are placed in silence mode a time;
e2) the second data inquiry that is not declared for said module is transmitted after that; and
f2) the module (2.x) is checked in this connection to see whether it remains silent in reply to the second, non-declared data inquiry.

3. Method according to any one of the preceding claims, wherein in each case the position (s2.x ist) of the transmitted data is detected and compared with the predetermined position (s2.x soll), too.

4. Central unit (1) for a bus system for data exchange with a plurality of modules (2.1...2.n) by means of a data protocol frame, wherein in the central unit (1)
a) an assigned position (D2.x) within the data protocol frame is stored for each module (2.x);
b) there is provided at least one instruction for a data inquiry (D1) in reply to which the modules, in error-free condition in normal operation, transmit data to the central unit (1) and/or the other modules (2.1...2.n);
**characterized in that**
c) the central unit is configured for transmitting an instruction to be silent in reply to which the modules (2.1...2.n), in error-free condition, switch to a silence mode and do not transmit any data in reply to the declared data inquiry (D1).

5. Module (2.1...2.n) for a bus system for data exchange between a central unit (1) and a plurality of said modules (2.1...2.n) by means of a data protocol frame, wherein
a) an assigned position (D2.x) within the data protocol frame is stored in each module (2.x);
b) there is provided at least one instruction for a data inquiry (D1) in reply to which the module (2.x), in error-free condition in normal operation, transmits data to the central unit (1) and/or the other modules (2.1...2.n);
**characterized in that**
c) the module (2.x) is configured such that it, in error-free condition, switches to a silence mode in reply to an instruction to be silent and does not transmit any data in reply to the declared data inquiry (D1).

6. Bus system consisting of a central unit (1) according to claim 4 and a plurality of modules (2.1...2.n) according to claim 5, said modules being connected to the central unit (1) via a bus line (3) for data exchange.

7. Bus system according to claim 6, **characterized in that** there is provided, at least for a group of modules (2.1...2.n), a data inquiry (D1) that is addressed to said group as a whole, wherein the modules are configured such that the modules (2.1...2.n), one after the other, transmit their data in their respective position (D2.1...D2.n) in reply to the data inquiry addressed to said group as a whole.

8. Passenger protection system for use in a vehicle with a central unit (1) and modules (2.1...2.n) of sensors and/or passenger safeguards, **characterized in that** said passenger protection system includes a bus system according to any one of the preceding claims 6 or 7, said bus system being configured such that the data exchange between the central unit (1) and the modules (2.1...2.n) takes place by means of said bus system.

## Revendications

1. Procédé de contrôle du bon fonctionnement de modules (2.1...2.n) dans un système de bus avec une unité centrale (1) pour l'échange de données au moyen d'un cadre de protocole de données
a) une position (D2.x) affectée pour chaque module (2.x) étant prédéfinie à l'intérieur du cadre de protocole de données,
b) au moins un appel de données (D1) étant convenu, en réponse auquel au moins un des modules (2.x) dans l'état correct dans le mode normal envoie des données à l'unité centrale (1) ou/ou aux autres modules (2.1...2.n),
c) **caractérisé en qu'il** est prévu une instruction de silence en réponse à laquelle les modules (2.1...2.n) dans l'état correct passent dans un mode de fonctionnement silencieux et n'envoient pas de données en réponse à l'appel de données (D1) convenu,
d) tous les modules (2.1...2.n) étant d'abord placés dans le mode de fonctionnement silencieux,
e) l'appel de données (D1) convenu étant envoyé ensuite et
f) étant en l'occurrence contrôlé si un des modules (2.1...2.n), malgré le mode de fonctionnement silencieux, envoie des données en réponse à l'appel de données (D1) convenu,
g) puis, tous les modules (2.1..., 2.n) sauf un module (2.x) à tester étant placés respectivement dans le mode de fonctionnement silencieux,
h) ultérieurement au moins un appel de données (D1) convenu pour ce module à tester (2.x) étant envoyé et
i) étant vérifié en l'occurrence si le module (2.x) envoie ses données en réponse à l'appel de données convenu.

2. Procédé selon la revendication 1, **caractérisé en ce que**,
b1) pour un module (2.x) au moins un premier appel de données (D1) est convenu, en réponse auquel le module (2.x) dans l'état correct dans le mode normal envoie des données à l'unité centrale (1) et/ou aux autres modules (2.1...2.n),
b2) un deuxième appel de données est prévu, mais n'est pas convenu pour ce module (2.x),
d) et respectivement tous les modules (2.1...,2.n) sauf ce module (2.x) sont placés dans le mode de fonctionnement silencieux,
e2) ultérieurement le deuxième appel de données non convenu pour ce module est envoyé et
f2) il est vérifié en l'occurrence si le module (2.x) se tait en réponse au deuxième appel de données non convenu.

3. Procédé selon l'une des revendications précédentes, la position (s2.x_{effectif}) des données émises étant respectivement aussi détectée et comparée à la position prédéfinie (s2.x_{consigne}).

4. Unité centrale (1) pour un système dé bus pour l'échange de données avec une pluralité de modules (2.1...2.n) au moyen d'un cadre de protocole de données,
a) une position affectée (D2.x) pour chaque module (2.x) dans l'unité centrale (1) étant enregistrée à l'intérieur du cadre de protocole de données,
b) au moins une instruction pour un appel de données (D1) étant prévue, en réponse à laquelle les modules dans l'état correct dans le mode normal. envoient des données à l'unité centrale (1) et/ou aux autres modules 2.1...2.n),
**caractérisé en ce que**
c) l'unité centrale est configurée pour l'émission d'une instruction de silence, en réponse à laquelle les modules (2.1...2.n) dans l'état correct passent dans un mode de fonctionnement silencieux et n'envoient pas de données en réponse à l'appel de données (D1) convenu.

5. Module (2.1...2.n) pour un système de bus pour l'échange de données entre une unité centrale (1) et une pluralité de ces modules (2.1...2.n) au moyen d'un cadre de protocole de données,
a) dans chaque module (2.x) une position (D2.x) affectée étant enregistrée à l'intérieur du cadre de protocole de données,
b) au moins une instruction pour un appel de données (D1) étant prévue, en réponse à laquelle le module (2.x) dans l'état correct dans le mode normal envoie des données à l'unité centrale (1) et/ou aux autres modules (2.1...2.n),
**caractérisé en ce que**
c) le module (2.x) est configuré de sorte que, en réponse à une instruction de silence, il passe, dans l'état correct, à un mode de fonctionnement silencieux et n'envoie pas de données en réponse à l'appel de données (D1) convenu.

6. Système de bus constitué d'une unité centrale (1) selon la revendication 4 ainsi que d'une pluralité de modules (2.1...2.n) selon la revendication 5, qui sont raccordés à l'unité centrale (1) via une ligne de bus (3) pour l'échange de données.

7. Système de bus selon la revendication 6, **caractérisé en ce que**, pour au moins un groupe de modules (2.1...2.n), il est prévu un appel de données (D1) adressé en commun à ce groupe, les modules étant constitués de sorte que, en réponse à l'appel de données adressé en commun à ce groupe, les modules (2.1...2.n) envoient leurs données successivement chacun à sa position (D2.1...D2.n).

8. Système de protection d'occupants pour l'utilisation dans un véhicule automobile avec une unité centrale (1) ainsi qu'avec des modules (2.1...2.n) de capteurs et/ou d'équipements de protection d'occupants, **caractérisé en ce qu'**il comporte un système de bus selon l'une des revendications précédentes 6 ou 7, lequel est constitué de sorte que l'échange de données entre l'unité centrale (1) et les modules (2.1...2.n) s'effectue au moyen de ce système de bus.
